# EUROPÄISCHE PATENTANMELDUNG

(11) **EP 0 777 956 A1**
(43) Veröffentlichungstag der Anmeldung: **11.06.1997**
(21) Anmeldenummer: 96118940.4
(22) Anmeldetag: 27.11.1996
(51) Int. Cl.: A01B 73/04, A01B 61/04

(54) **Zinkenanordnung für Bodenbearbeitungsgeräte**

(30) Priorität: 07.12.1995 DE 19545702
(71) Anmelder: Horsch Maschinen GmbH, 92421 Schwandorf (DE)
(72) Erfinder: Horsch, Michael, 92421 Schwandorf (DE)
(74) Vertreter: Wasmeier, Alfons, Dipl.-Ing.

(57) **Zusammenfassung**

Bei einem landwirtschaftlichen Bodenbearbeitungsgerät, z.B. einem Grubber, sind die Bearbeitungswerkzeuge, z.B. Zinken (12), Schare oder dergl. schwenkbar am Tragrahmen (1-5) so angeordnet, daß sie mittels Servoantrieb in eine verstaute Position umklappbar sind. Bevorzugt sind die Werkzeugelemente an mit dem Tragrahmen (1-5) befestigten Zinkenhaltern (10) schwenkbar befestigt.

## Beschreibung

Die Erfindung betrifft ein landwirtschaftliches Bodenbearbeitungsgerät nach dem Oberbegriff des Anspruches 1.

Bei Grubbern und ähnlichen landwirtschaftlichen Bodenbearbeitungsgeräten ist wegen der immer größer werdenden Maschinenarbeitsbreiten, die im Feldeinsatz benötigt werden, ein Hochklappen der beiden äußeren Arbeitsabschnitte für Straßenfahrt erforderlich. Die für Straßenfahrt zulässige Gesamtbreite kann z.B. für eine Maschine mit 12 m Arbeitsbreite dadurch erreicht werden, daß der sich über eine Gesamtbreite von 12 m erstreckende Werkzeugtragrahmen an beiden Außenseiten zweimal um 90° hochgeklappt wird und damit ein nahezu geschlossener, geklappter Rahmen mit quadratischer Querschnittsform erzielt wird. Die Bearbeitungswerkzeuge, z.B. die Grubberzinken, stehen vom Tragrahmen nach abwärts und in zusammengeklapptem Zustand an den vertikalen Rahmenabschnitten seitlich nach außen sowie an den oberen horizontalen Abschnitten der nach innen aufeinander zu geklappten Rahmenabschnitte nach oben. An den vertikalen Abschnitten haben die Zinken, Scharelemente oder dergl. Werkzeugelemente einen Überstand nach außen (ebenso wie nach unten und nach oben an den horizontalen Abschnitten) von ca. 700 mm, was die effektive Breite der hochgeklappten Trägerrahmenabschnitte nochmals reduziert.

Aufgabe der Erfindung ist es, bei einer zulässigen Breite des geklappten Rahmens mit Werkzeugelementen von maximal 3 m den Abstand der beiden seitlichen, hochgeklappten Rahmenabschnitte möglichst groß, d.h. möglichst bei 3 m zu halten und die Werkzeuge so am Tragrahmen anzuordnen, daß sie nicht oder möglichst wenig seitlich aus den Trägerrahmen vorstehen und gleichzeitig die Verkehrsteilnehmer nicht gefährden können.

Gemäß der Erfindung wird diese Aufgabe mit den Merkmalen des Kennzeichens des Anspruches 1 gelöst. Weitere Ausgestaltungen der Erfindung sind Gegenstand der Unteransprüche.

Mit dem erfindungsgemäßen Vorschlag wird erreicht, daß die von dem Tragrahmen nach abwärts stehenden Werkzeugelemente im eingeklappten Zustand des Tragrahmens seitlich nicht oder nur minimal über die Seitenbegrenzungen vorstehen, so daß damit die für Straßenfahrt maximal zulässige Gesamtbreite von 3 m voll für die Abmessungen des Tragrahmens ausgenutzt werden kann. Dies wird dadurch erreicht, daß die vorstehenden Werkzeugelemente aus der vertikal zum Tragrahmen stehenden Arbeitsposition in eine verdeckte Position etwa parallel zum Tragrahmen verschwenkbar ausgebildet sind. Die Verschwenkung der Werkzeugelemente, insbesondere Zinkenanordnungen, erfolgt dabei für das gesamte Gerät gemeinsam über einzelne hydraulisch oder pneumatisch betätigte Antriebszylinder.

Die Werkzeugelemente sind in Form von mit dem Tragrahmen fest verbundenen Zinkenhaltern und an den Zinkenhaltern gelenkig befestigten Zinken ausgebildet. Die Zinkenhalter haben die Form von Winkelarmen, an deren freiem Ende ein Antriebs- bzw. Klappzylinder festgelegt ist. Das freie Ende der Kolbenstange dieses Zylinders ist über einen Flansch mit dem Zinken befestigt. Die Kinematik ist dabei so gewählt, daß mit dem doppeltwirkenden Arbeitszylinder die Zinken aus ihrer Arbeitsstellung (vertikale Position) in ihre eingeklappte Stellung (etwa horizontale Position) verschwenkbar sind. Auf diese Weise halten die Arbeitszylinder die Zinken in der Arbeitsstellung in Eingriff mit dem Boden, während in der eingeklappten Stellung die Zinken in der Stauposition gehalten werden. Die Arbeitszylinder weisen eine Steinsicherung auf, die in Form einer mit dem Arbeitszylinder gekoppelten Stickstoffblase, einer entsprechenden Feder oder dergl. ausgebildet ist.

Zur Erzielung einer möglichst geringen Bauhöhe wird gemäß der Erfindung vorgeschlagen, die Verbindung des Zinkenhalters am Rohrrahmen so auszubilden, daß an der Klemmverschraubung, mit der die Zinkenhalter befestigt werden, eine Schloßschraube mit Vierkant vorgesehen ist, die in eine den Befestigungsbügel schließende Ringschraube eingeschraubt ist. Mit Hilfe einer derartigen Schloßschraube wird erreicht,daß die Schraube nur minimal über den Befestigungsbügel nach unten vorsteht. Des weiteren wird zur Erzielung einer möglichst geringen Bauhöhe der Zinkenhalter so ausgelegt, daß sein Drehpunkt oberhalb der Unterkante des Rahmenrohres liegt.

Bei einer weiteren Ausführungsform der Erfindung ist der Antriebs- bzw. Klappzylinder ebenfalls am Zinkenhebel gelagert, die Kolbenstange des Zylinders wirkt jedoch nicht unmittelbar auf den Zinken, sondern über einen Kniehebel, dessen einer Arm mit dem Zinken und dessen anderer Arm gelenkig mit dem Zinkenhebel verbunden ist. Die beiden Hebel stehen an ihren freien Enden miteinander gelenkig in Verbindung, wobei die beiden Hebelarme in Arbeitsstellung der Zinkenanordnung eine Position kurz vor der Totpunkt-Position einnehmen, während in eingeklapptem Zustand die beiden Hebelarme einen wesentlich größeren Winkel einschließen.

Nachstehend wird die Erfindung in Verbindung mit der Zeichnung anhand von Ausführungsbeispielen erläutert. Es zeigt:
Fig. 1 eine schematische Gesamtansicht eines eingeklappten Grubbers von hinten,
Fig. 2 eine Aufsicht auf den eingeklappten Grubber nach Fig. 1 von oben,
Fig. 3 eine Ausführung eines Zinkens und Zinkenhalters in Arbeitsposition,
Fig. 4 Zinken und Zinkenhalter nach Fig. 3 in eingeklappter Position,
Fig. 5 den Zinkenhalter am Rahmenrohr befestigt,
Fig. 6 eine andere Ausführungsform einer Zinkenanordnung in Arbeitsstellung, und
Fig. 7 die Anordnung nach Fig. 6 in eingeklappter Position.

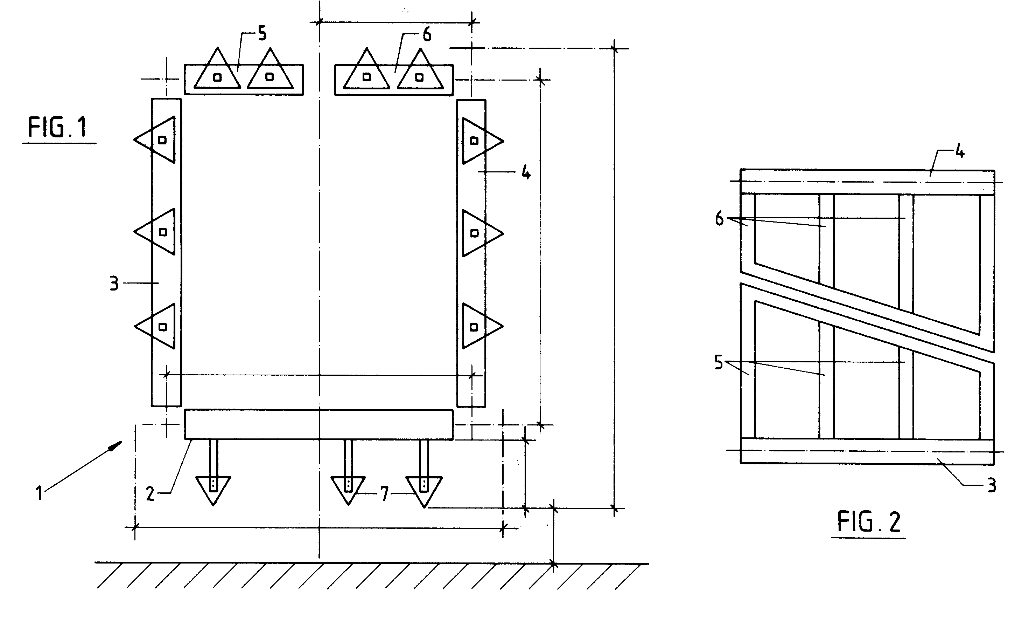

In Fig. 1 ist schematisch und in Rückansicht ein Grubberrahmen 1 dargestellt, der aus einem feststehenden mittleren Teil 2, hochklappbaren Seitenteilen 3 und 4 sowie an den Außenenden der Seitenteile 3 und 4 gelenkig angeordneten, in die horizontale Ebene geklappten Teilen 5 und 6 besteht. Mit den Rahmenteilen 2 - 5 sind Zinkenanordnungen 7 oder entsprechende Werkzeugelemente befestigt, die im Betrieb mit dem Boden in Eingriff kommen. Wie in Verbindung mit den Rahmenteilen 3 - 6 angedeutet, sind diese Zinkenanordnungen in Fahrtstellung des Gerätes eingeklappt.

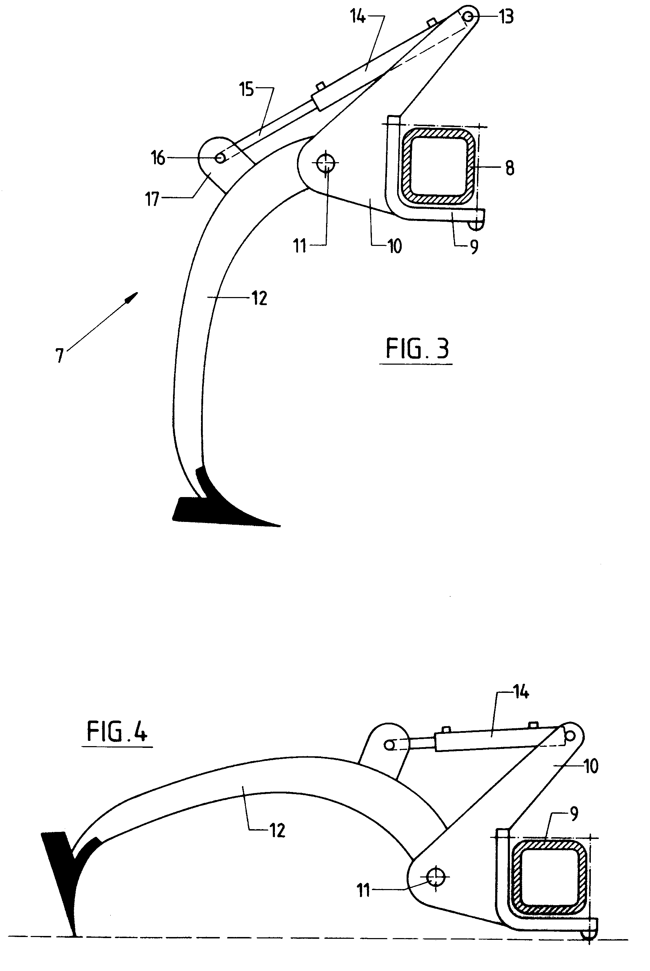

Eine Ausführungsform einer Zinkenanordnung 7 ist in Fig. 3 in Arbeitsstellung dargestellt. Das Trägerrohr 8 des Tragrahmens 2 nimmt über einen Befestigungsbügel 9 einen Zinkenhalter 10 auf, der an seinem rahmennahen Ende eine Gelenkstelle 11 besitzt, an der ein Zinken 12 gelenkig gelagert ist. Am rahmenfernen Ende des Zinkenhalters 10 ist bei 13 ein Antriebszylinder 14 angelenkt, der vorzugsweise hydraulisch betätigt ist, und dessen Zylinderstange 15 bei 16 an einem Flansch 17 gelenkig befestigt ist, der mit dem Zinken 12 starr verbunden ist. Während in Fig. 3 der Antriebszylinder 14 ausgefahren und der Zinken 12 in seiner Arbeitsstellung gezeigt ist, zeigt die Darstellung nach Fig. 4 die entsprechende Zinkenanordnung 7 bei eingefahrenem Zylinder 14 und eingeklapptem Zinken 12. Diese letztere Position ist für Straßenfahrt des Gerätes bestimmt.

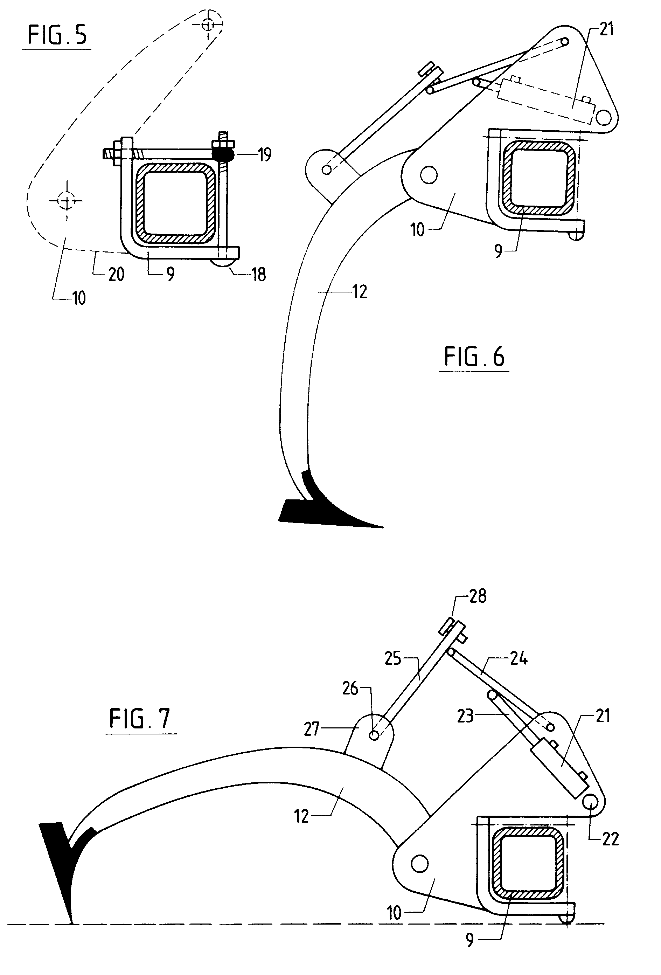

Die Befestigung der Zinkenanordnung an dem Rahmenrohr 8 des Tragrahmens 2 ist in Fig. 5 in einer Ausführungsform gezeigt, in der der Befestigungsbügel 9 mit dem Zinkenhalter 10 mittels Schloßschraube 18 mit Vierkant und mittels Ringschraube 19 befestigt ist. Dabei ist für eine einwandfreie Positionierung der Zinkenanordnung im Gesamtgerät von Bedeutung, daß die Befestigung des Zinkenhalters am Rahmenrohr nach unten nicht oder nur minimal vorsteht, um eine möglichst geringe Bauhöhe aufgrund der Klemmverschraubung zu erzielen. Des weiteren ist der Drehpunkt 11 des Zinkenhalters 10 nach der Neuerung so angeordnet, daß er oberhalb der Unterkante des Rahmens liegt.

Bei einer anderen Ausführungsform der Neuerung nach den Figuren 5 und 6 ist die Zylinderanordnung zum Klappen des Zinkens so ausgebildet, daß der Antriebszylinder 21 bei 22 am Zinkenhalter 10 angelenkt ist, und daß die Kolbenstange 23 mit einem Arm 24 einer Kniehebelgelenkanordnung 24, 25 verbunden ist. Der Arm 24 ist am Zinkenhalter 10 angelenkt und mit dem freien Ende am Arm 25 befestigt, der seinerseits über die Gelenkstelle 26 mit dem Flansch 27 des Zinkens 12 verbunden ist. Die beiden einander zugewandten Enden der Kniehebelanordnung 24, 25 weisen eine Einstellvorrichtung 28 auf, die z.B. eine Einstellschraube ist, mittels der die Auslösekraft eingestellt werden kann. In der Arbeitsposition sind die Kniehebelarme 24 und 25 so angeordnet, daß sie etwas über Totpunkt positioniert sind. In dieser Position muß über den Antriebszylinder 21, 23 zunächst für die Auslösung eine verhältnismäßig hohe Kraft aufgebracht werden, die dann aber beim weiteren Auslösevorgang eine wesentlich reduzierte Antriebskraft für das Hochklappen des Zinkens 12 notwendig macht. Sowohl bei der Ausführungsform nach Fig. 3 als auch bei der nach Fig. 6 wird dem Antriebszylinder eine Vorspannung mittels Stickstoffblase oder dergl. erteilt.

## Patentansprüche

1. Landwirtschaftliches Bodenbearbeitungsgerät, z.B. Grubber, mit einem die Bearbeitungswerkzeuge aufnehmenden Tragrahmen, dessen äußere Abschnitte nach oben klappbar und bei dem in hochgeklapptem Zustand die Bearbeitungswerkzeuge nach außen gerichtet sind, **dadurch gekennzeichnet**, daß die Bearbeitungswerkzeuge, z.B. Zinken, Schare oder dergl. schwenkbar am Tragrahmen so angeordnet sind, daß sie in eine verstaute Position mittels Servoantrieb umklappbar sind.

2. Gerät nach Anspruch 1, dadurch gekennzeichnet, daß die Werkzeugelemente, z.B. Zinken, an mit dem Tragrahmen befestigten Zinkenhaltern schwenkbar befestigt sind.

3. Gerät nach Anspruch 1 oder 2, dadurch gekennzeichnet, daß ein doppeltwirkender, hydraulisch oder pneumatisch arbeitender Antriebszylinder zwischen Zinkenhalter und Zinken festgelegt ist, dessen voller Betätigungshub einer Verschwenkung des Zinkens um etwa 90° entspricht.

4. Gerät nach einem der Ansprüche 1 - 3, dadurch gekennzeichnet, daß der Zinkenhalter als Kniehebel ausgebildet und am Tragrahmen diesen teilweise umgreifend befestigt ist, daß der Antriebszylinder am freien Ende des Zinkenhalters angelenkt ist, und daß der Zylinderkolben an einem Flansch des Zinkens festgelegt ist.

5. Gerät nach einem der Ansprüche 1 - 4, dadurch gekennzeichnet, daß die Zinken mit dem Rahmenrohr mit Hilfe jeweils eines das Rohr teilweise umschließenden Befestigungsbügels verbunden sind, daß die Befestigungsbügel jeweils durch eine Ringschraube und eine Schloßschraube geschlossen sind, daß die Schloßschraube am unteren Ende minimal über den Befestigungsbügel hinaus vorsteht, und daß der Schwenkpunkt der Zinken oberhalb der Unterkante des Rahmens angeordnet ist.

6. Gerät nach einem der Ansprüche 1 - 5, dadurch gekennzeichnet, daß der doppeltwirkende Antriebszylinder mit einer Steinsicherung versehen ist, die als Vorspann-Stickstoffblase ausgebildet ist.

7. Gerät nach einem der Ansprüche 1 und 2, dadurch gekennzeichnet, daß zwischen Zinkenhalter und Zinken ein Kniegelenk angeordnet ist, dessen einer Gelenkarm am Zinkenhalter angelenkt und mit einem am Zinkenhalter festgelegten Antriebszylinder verbunden ist, und dessen anderer Gelenkarm mit einem Flansch am Zinken angelenkt ist, während das andere Ende mit dem freien Ende des einen Armes in Verbindung steht.

8. Gerät nach Anspruch 7, dadurch gekennzeichnet, daß die beiden Kniegelenkarme eine Vorrichtung zur Einstellung der Auslösekraft des Kniehebels, z.B. in Form einer Stellschraube, aufweisen.

9. Gerät nach Anspruch 7 oder 8, dadurch gekennzeichnet, daß der Antriebszylinder mittels Stickstoffblase vorgespannt ist.
